# EUROPEAN PATENT APPLICATION

(11) **EP 1 813 839 A2**
(43) Date of publication of application: **01.08.2007**
(21) Application number: 07101304.9
(22) Date of filing: 29.01.2007
(51) Int. Cl.: F16H 57/04

(54) **Positive lubrication of a meshing gear**

(30) Priority: 30.01.2006 US 343163
(71) Applicant: Honeywell International Inc., Morristown, NJ 07962 (US)
(72) Inventor: Shilo, Mark A., Scottsdale, AZ 85254 (US); Meacham, Walter L., Phoenix, AZ 85283 (US); Zadik, John T., Tempe, AZ 85283 (US)
(74) Representative: Haley, Stephen

(57) **Abstract**

Device for the lubrication of teeth (103) in a meshing gear (100). A plurality of teeth (103) are formed about a periphery of a toothed wheel (102). Each tooth (101) is defined by a root portion (106), an involute profile portion (108), and a minimal stress portion (110). The device is formed by a plurality of fluidic passages (120), each including an inlet (122) and an outlet (124), in fluidic communication with a lubricant (19) and the minimal stress portion (110) of at least one (101) of the plurality of teeth (103). During operation, the lubricant (119) contained flows via centrifugal force to the minimal stress portion (110) of each (101) of the plurality of teeth (103) via the fluidic passages (120). The fabrication of the outlet (124) at the minimal stress portion (110) of the teeth (103) eliminates any further stress fabrication on the portion of the tooth structure that is under stress during operation.

## Description

The present invention relates to the lubrication of gears. More particularly, the present invention relates to the lubrication of toothed meshing gears.

It is well known to dispose meshing gears in a lubricant filled case. The lubricant, which may be either solid or liquid, bathes the gears, creating a lubricating field that maintains gear lubrication. Alternative means of lubricating meshing gears have been used, such as through the use of a static oil jet mounted on the gearbox structure that disperses lubricant onto the meshing teeth. Oil jet dispersion typically is achieved in one of two ways: as an into-mesh jet where oil is dispersed onto the teeth prior to meshing, or as an out-of-mesh jet where lubricant is dispersed onto the teeth as they complete the mesh. In addition, a cooling oil splash or mist has been used to lubricate meshing gears in which high speed components chum oil spray through a gearbox space.

Insufficient lubrication between meshing gears can cause scoring, micropitting, and other forms of wear and damage to the involute profile of the gear teeth, leading to higher vibration, noise, heat, and ultimately gear tooth failure. Generally, in a meshing gear that turns in a single direction, while under a loaded condition, one side of the tooth (and one side of the tooth root) is subject to the highest stress because the load is applied adjacent to that point. More specifically, the highest tensile stress on the gear tooth is located at a point in the tooth root adjacent to where the tooth is being pushed, receiving the greatest load during the period of revolution when there is single tooth contact.

Various attempts have been made to provide lubricating film on the gear teeth. These include providing a lubricant directly to each of the centers of the roots of the gear teeth or to the involute profile of each of the gear teeth, both highly stressed points. In general, prior attempts have formed a fluid passage hole located within this high stress region. This can be considered a rotating oil jet. Lubricant is fed to the high stress points during operation by centrifugal force. The fabrication of a passage within the tooth in this high stress region may cause an even higher stress concentration about the passage. This can exacerbate the possibility of a crack developing and the gear tooth breaking off. Attempts at providing lubrication to a lower stress point of each of the gear teeth, or to a location that is distant from the maximum stress point of the gear teeth, has not been achieved.

Thus, there is a need for a means for lubricating a meshed gear assembly wherein a constant lubricating film is provided by a rotating jet at a minimal stress point of a plurality of gear teeth that form the meshed gears, thereby achieving a constant lubricating film during a loaded condition.

The present invention provides a gear assembly, comprising: a shaft, a toothed wheel, a source of lubricant and a plurality of fluidic passages. The toothed wheel is mounted on the shaft and configured to rotate therewith. The toothed wheel has a plurality of teeth formed on, and extending radially from, a periphery thereof. Each of the plurality of teeth is defined by a root portion, an involute profile portion, and a minimal stress portion located between the root portion and the involute profile portion. The source of lubricant is adapted to supply a lubricant to the gear assembly, either through a bore in the shaft or from an external jet source. Each of the plurality of fluidic passages is in fluidic communication with the source of lubricant and the minimal stress portion of one of the plurality of teeth. During gear assembly operation, lubricant flows, under the influence of centrifugal force, to the minimal stress portion of each of the plurality of teeth via the plurality of fluidic passages.

In another exemplary embodiment, provided is a gear assembly, comprising, a shaft, a toothed wheel, an annular well, and a plurality of fluidic passages. The toothed wheel is mounted on the shaft, and configured to rotate therewith. The toothed wheel includes a plurality of teeth formed on, and extending radially from, a periphery thereof. Each of the plurality of teeth is defined by a root portion, an involute profile portion, and a minimal stress portion located between the root portion and the involute profile portion. The annular well is formed in the gear assembly between the shaft and the plurality of teeth and adapted to receive a lubricant. Each of the plurality of fluidic passages is in fluidic communication with the annular well and the minimal stress portion of one of the plurality of teeth. During operation, lubricant flows, under the influence of centrifugal force, to the plurality of teeth via the fluidic passages.

In addition, provided is a method of lubricating a plurality of teeth in a meshing gear comprising the steps of providing a shaft, configured to rotate, and a toothed wheel mounted on the shaft. The toothed wheel also configured to rotate. The method further includes the steps of providing a source of lubricant to provide lubricant to the gear assembly, and forming a plurality of fluidic passages, each fluidic passage in fluidic communication with the lubricant and the minimal stress portion of one of the plurality of teeth. The toothed wheel is configured to rotate therewith the shaft and includes a plurality of teeth formed on, and extending radially from, a periphery thereof. Each of the plurality of teeth is defined by a root portion, an involute profile portion, and a minimal stress portion located between the root portion and the involute profile portion. During gear assembly operation, lubricant flows, under the influence of centrifugal force, to the minimal stress portion of each of the plurality of teeth via the plurality of fluidic passages.

Other independent features and advantages of the preferred positive gear lubricating assembly will become apparent from the following detailed description, taken in conjunction with the accompanying drawings which illustrate, by way of example, the principles of the invention.

### In the Drawings;

FIG. 1 is a schematic representation of a cross-section of a meshing gear taken along line 1-1 of FIG. 2 according to the present invention;

FIG. 2 is a schematic representation of a cross-section of the meshing gear of FIG. 1 taken along line 2-2 of FIG. 1, according to the present invention;

FIG. 3 is a schematic representation of a cross-section of an alternate embodiment of a meshing gear taken along line 3-3 of FIG. 4, according to the present invention;

FIG. 4 is a schematic representation of a cross-section of the embodiment of FIG. 3 taken along line 4-4 of FIG. 3, according to the present invention;

FIG. 5 is a schematic representation of a cross-section of another alternate embodiment illustrating a modification to the embodiment shown in FIGs. 3 and 4, according to the present invention;

FIG. 6 is a schematic representation of a cross-section of another alternate embodiment illustrating a modification to the embodiment shown in FIGs. 3 and 4, according to the present invention;

FIG. 7 is a schematic representation of a cross-section of yet another alternate embodiment illustrating a modification to the meshing gear of FIGs. 3 and 4 taken along line 7-7 FIG. 8, according to the present invention; and

FIG. 8 is a schematic representation of a cross-section of the embodiment of FIG. 7 taken along line 8-8 of FIG. 7, according to the present invention.

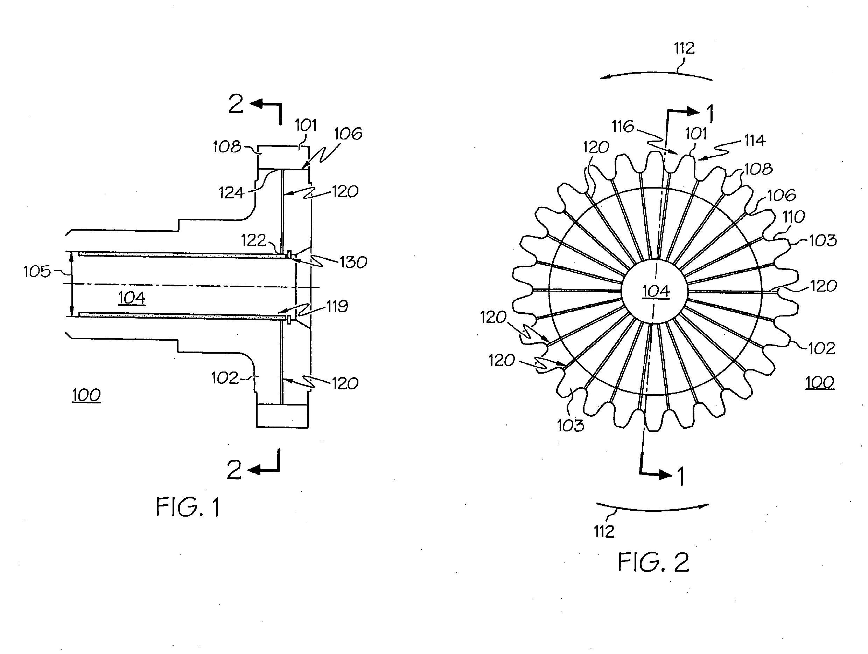

The present invention employs a means for applying a lubricant to the involute profile of a tooth on a meshing gear via a point of low stress in the tooth root of the gear. The device and method provide for the positive lubrication and maintenance of a lubricating film in meshing gears. Referring now to FIGs. 1 and 2 illustrated is a portion of a gear 100, and more particularly a toothed wheel 102, mounted on a shaft 104, sometimes referred to as a gear assembly. The assembly may be one single piece of hardware, but is hereinafter referred to as an assembly. The shaft 104 is configured, upon receipt of a suitable drive force, to rotate. The shaft 104 may simply be a bore of the gear assembly. Furthermore, The drive force may be applied either to the shaft 104, which in turn causes the toothed wheel 102 to rotate, or it may be applied to the toothed wheel 102, which causes the shaft 104 to rotate. Toothed wheel 102 includes a plurality of meshing teeth 103 each comprised of a root portion 106 and an involute profile portion 108. Each tooth 103 has a load side 114 which is the side that applies or receives load from the mating gear, and a coast side 116 which is not loaded. A minimal stress portion 110 is located in the region near where the root portion 106 meets the involute profile portion 108 on the coast side 116. This minimal stress portion 110 is the point at which relatively low tensile stress is exhibited upon each of the meshing teeth 103.

In the embodiments described, gear 100 is a one-way gear in which operational movement is counterclockwise as indicated by arrows 112 (FIG. 2). It should be understood that this particular type of counterclockwise gear movement is merely exemplary and that a gear that operates using one-way clockwise movement may also be used. During counterclockwise gear movement, each individual tooth 101 of the plurality of meshing teeth 103 may be subject to a pushing load on the load side 114 of tooth 101, and is considered to be absent a load on the coast side 116 of tooth 101.

During movement of gear 100, the load side 114 is under a pushing force at a point where the tooth 101 is being pushed by its meshing tooth (not shown). The highest tensile stress is exhibited on the tooth 101 typically exhibited at the root-end of the involute profile 108. The coast side 116 of the tooth 101 is not under a load when gear 100 is operational.

During operation of gear 100 under some loading conditions, loss of gear tooth contact between the plurality of teeth 103 and their meshing teeth may occur. Variations in teeth profile or dynamic motions may also cause a loss of gear tooth contact. During operation of gear 100, it is desirable to maintain a lubricating film on each tooth 101 of the plurality of teeth 103 to reduce scoring, micropitting, and other forms of wear and damage to the involute profile of the gear teeth.

In the embodiment disclosed in FIGs. 1 and 2, a lubricant 119, such as a lubricating oil, grease, or the like, is present within an ID bore 105 of shaft 104 In a preferred embodiment the lubricant is substantially fluidic to allow for flow as described below. Lubricant 119 is deposited by either an external jet from outside the gear, or from elsewhere in the shaft 104 or gear bore, not shown. Gear 100 further includes a plurality of fluid passages 120 formed in, and circumferentially spaced about, shaft 104. Each passage 120 extends from the ID bore 105 of shaft 104 to the minimal stress portion 110 of each tooth 101. Fluid passages 120 allow the lubricant 119 to be applied to the minimal stress portion 110 of each tooth 101. As previously stated, minimal stress portion 110 of each tooth 101 is the area of the tooth 101 that has the lowest load stress. Accordingly, the passages 120 do not place further stress upon each individual tooth 101 at the load side involute profile 108, where the highest tensile stress effects are located. The lubricant 119 is retained axially within the bore 105 of shaft 104 by a feature 130, such as a pressed in annular plug, a circular snap ring, or other design feature.

During operation, the lubricant 119 flows by centrifugal force from the bore 105 of shaft 104 through the plurality of passages 120 to the minimal stress portion 110 of each of the plurality of teeth 103. Each fluid passage 120 includes an inlet opening 122 proximate the shaft 104 and an outlet opening 124 proximate the minimal stress portion 110 of each tooth 101. The flow of the lubricant 119 through passages 120 and through outlet openings 124 to the minimal stress portion 110 of each tooth 101 provides lubrication to the meshing teeth 103 as the wheel is rotated. This constant, direct supply of lubrication to each meshing tooth 101 provides for the buildup of a lubricating film without increasing the stress to the plurality of teeth 103, and prevents wear of the gear teeth.

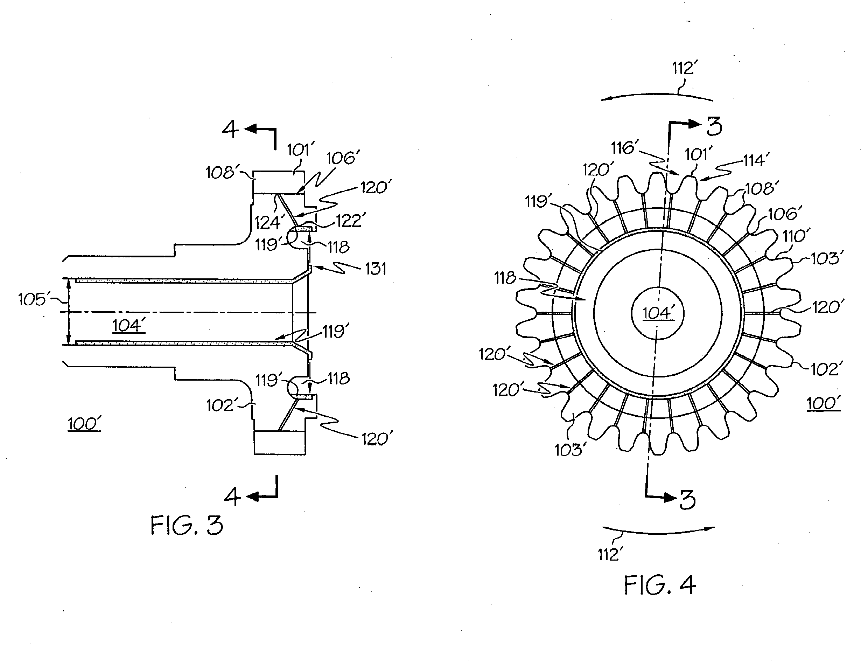

FIGs. 3 and 4 illustrate modifications to the embodiment of FIGs. 1 and 2. Accordingly, all components of FIGs. 3 and 4 that are similar to the components illustrated in FIGs. 1 and 2, are designated with similar numbers, having a prime added to indicate the different embodiment. As illustrated in FIGs. 3 and 4, gear 100' additionally includes an annular well 118 having contained therein a lubricant 119'. Gear 100'further includes a plurality of fluid passages 120' formed in, and circumferentially spaced about, shaft or gear bore 104'. Each passage 120 extends from the annular well 118 to the minimal stress portion 110' of each tooth 101'. Fluid passages 120' allow the lubricant 119' to be applied to the minimal stress portion 110' of each tooth 101'. As previously stated, the passages 120' do not place further stress upon each individual tooth 101' at the load side 114' involute profile 108', where the highest tensile stress effects are located.

Annular well 118 is in fluidic communication with the minimal stress portion 110' of each tooth 101' via passages 120'. The plurality of passages 120' may be formed extending from annular well 118 to each individual tooth 101'. In an alternative embodiment, the plurality of passages 120' may be formed to extend from the annular well 118 to substantially all of the individual teeth 1.01', but not each individual tooth 101'. In either case, annular well 118 is continuously fed the lubricant 119' by centrifugal force draining, as indicated by arrow 131, the shaft 104'. As mentioned previously, lubricant 119' is present within the ID bore 105 of shaft 104', deposited there either by external jet from outside the gear, or from elsewhere in the shaft or gear bore, not shown.

During operation, the lubricant 119' flows by centrifugal force from the annular well 118 through the plurality of passages 120' to the minimal stress portion 110' of each of the plurality of teeth 103'. Each fluid passage 120' includes an inlet opening 122' proximate the annular well 118 and an outlet opening 124' proximate the minimal stress portion 110' of each tooth 101'. The flow of the lubricant 119 through passages 120 and through outlet openings 124 to the minimal stress portion 110' of each tooth 101' provides lubrication to the meshing teeth 103' as the wheel is rotated. Similar to the previously described embodiment, this constant, direct supply of lubrication to each meshing tooth 101' provides for the buildup of a lubricating film without increasing the stress to the plurality of teeth 103, and prevents wear of the gear teeth.

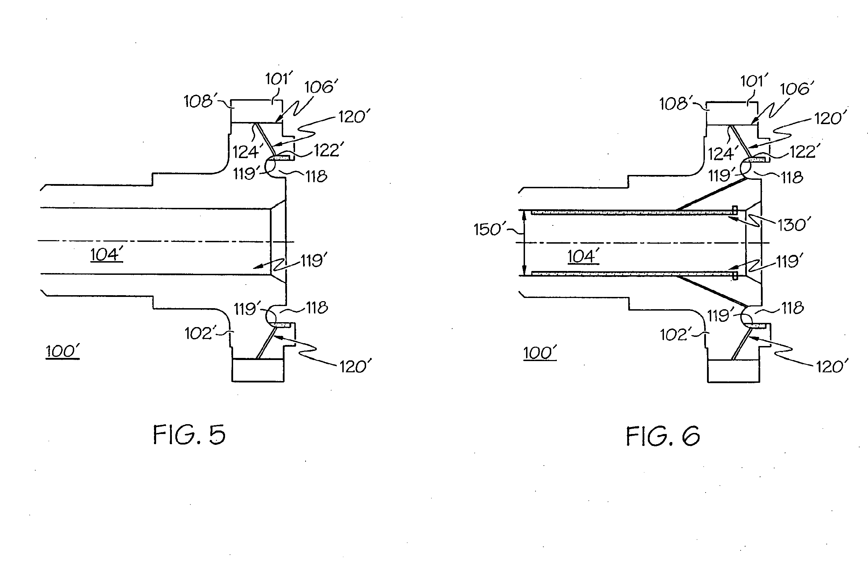

FIG. 5 illustrates a variation on this embodiment where the annular well 118 is continuously fed via a lubricating jet (not shown) located in the housing static structure. The lubricating jet supplies the lubricant 119' directly into the annular well 118.

FIG. 6 illustrates a variation on this embodiment where the annular well 118 is continuously fed via a plurality of fluid passages 126 which drain lubricant 119' from within the bore 105' of shaft 104'. As in the first embodiment, the lubricant 119' is retained axially within the bore 105' of shaft 104' by a feature 130', such as a pressed in annular plug, a circular snap ring, or other design feature.

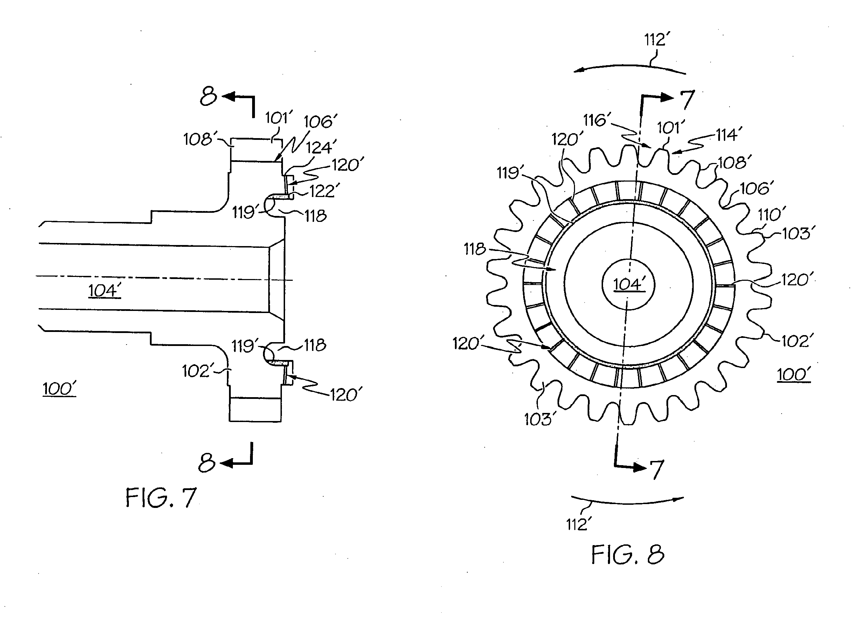

FIGs. 7 and 8 illustrate yet another alternate modification of the previous embodiment wherein the plurality of passages 120' connect the annular well 118 to the outlet opening 124' outboard of the loaded tooth roots. The lubricant 119' is applied directly onto the involute profiles 108' and also onto the profiles of the meshing gear teeth (not shown) Circumferential relocation of the passages 120' may be required to optimize the lubrication requirements of the mating gear (not shown). Annular well is fed via any of the methods previously discussed.

A means for lubricating a meshing gear has now been provided that includes a plurality of lubricating passages formed circumferentially about a shaft of a toothed wheel of a meshing gear. The lubricating passages are in fluidic communication with a lubricant located in the bore of the shaft or an annular well formed about the shaft and having contained therein the lubricant. The fluid passages are additionally in fluidic communication with a minimal stress portion of substantially all of the teeth that comprise the toothed wheel. The formation of the passages as this point of minimal stress does not increase the stress upon the plurality of teeth, yet provides a constant means for lubrication during loaded operating conditions. The fabricating of the outlet of the passages at a minimal stress portion of each of the plurality of teeth minimizes the formation of additional stress.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A gear assembly (100), comprising:
a shaft (104) configured to rotate;
a toothed wheel (102) mounted on the shaft (104) and configured to rotate therewith, the toothed wheel (102) having a plurality of teeth (103) formed on, and extending radially from, a periphery thereof, each of the plurality of teeth defined by a root portion (106), an involute profile portion (108), and a minimal stress portion (110) located between the root (106) portion and the involute profile portion (110);
a source of lubricant (119) adapted to supply a lubricant to the gear assembly (100); and
a plurality of fluidic passages (120), each fluidic passage in fluidic communication with the source of lubricant (119) and the minimal stress portion (110) of one (101) of the plurality of teeth (103), whereby, during gear assembly operation, lubricant supplied by the source of lubricant (119) flows, under the influence of centrifugal force, to the minimal stress portion (110) of each of the plurality of teeth (103) via the plurality of fluidic passages (120).

2. The device of claim 1, wherein the source of lubricant (119) is an external jet that provides lubricant to an ID bore (105) of the shaft (104).

3. The device of claim 1, wherein the source of lubricant (119) is an internal source housed in the gear assembly (100) that provides lubricant to an ID bore (105) of the shaft (104).

4. The device of claim 1, wherein the plurality of fluidic passages (120) are circumferentially positioned about the shaft (104).

5. The device of claim 1, further including an annular well (118) formed in the gear assembly (100) between the shaft (104) and the plurality of teeth (103), the annular well (118) in fluidic communication with the source of lubricant (119) and adapted to receive the lubricant.

6. The device of claim 5, wherein the plurality of fluidic passages (120) are circumferentially positioned about the annular well (118).

7. The device of claim 1, wherein each of the plurality of fluidic passages (120) includes a fluid inlet (122) and a fluid outlet (124), and wherein the fluid inlet (122) in fluidic communication with the source of lubricant (119) and the fluid outlet (124) is in fluidic communication with the minimal stress portion (110) of one (101) of the plurality of teeth (103).

8. The device of claim 1, wherein each (101) of the plurality of teeth (103) is in fluidic communication with a fluidic passage (120).

9. The device of claim 1, wherein the lubricant (119) is a lubricating oil.

10. The device of claim 1, wherein the source of lubricant (119) is one of a jet supply source, a lubricating oil, or a grease.
